# EUROPEAN PATENT APPLICATION

(11) **EP 3 447 479 A1**
(43) Date of publication of application: **27.02.2019**
(21) Application number: 17785833.9
(22) Date of filing: 10.04.2017
(51) Int. Cl.: G01N 23/04, G01N 23/083, G01N 23/18

(54) **METHOD AND DEVICE FOR CONTINUOUS NON-DESTRUCTIVE INSPECTION OF MEMBRANE-ELECTRODE ASSEMBLY**

(30) Priority: 19.04.2016 JP 2016083355
(71) Applicant: Toray Industries, Inc., Tokyo 103-8666 (JP)
(72) Inventor: FUKUDA, Seiji, Otsu-shi Shiga 520-8558 (JP)
(74) Representative: Hoefer & Partner Patentanwälte mbB
(86) International application number: PCT/JP2017/014605
(87) International publication number: WO 2017/183493

(57) **Abstract**

The present invention provides a method and a device for continuous non-destructive inspection for rapidly inspecting the entire area of a membrane-electrode assembly (MEA) and detecting minute internal foreign substances and minute internal defects. The continuous non-destructive inspection method for a membrane-electrode assembly according to the present invention includes the step of: detecting presence or absence of an internal foreign substance and an internal defect in the membrane-electrode assembly using a transmitted X-ray image obtained by repeating the steps of: conveying the membrane-electrode assembly to a photographing position sandwiched between an X-ray imaging unit and an X-ray source that is disposed so as to face the X-ray imaging unit and that has a focal spot size of 50 µm or less; temporarily stopping the conveyance of the membrane-electrode assembly and emitting X-rays from the X-ray source toward the X-ray imaging unit in a state where the membrane-electrode assembly stands still in the photographing position to take a transmitted X-ray image; and restarting the conveyance of the membrane-electrode assembly to move the membrane-electrode assembly from the photographing position.

## Description

### TECHNICAL FIELD

The present invention relates to a continuous non-destructive inspection method for a membrane-electrode assembly used in fuel cells and the like, and a continuous non-destructive inspection device used in the continuous non-destructive inspection method.

### BACKGROUND ART

A membrane-electrode assembly (MEA) is a multilayer structure having a catalyst coated membrane that includes a polymer electrolyte membrane and a catalyst applied or transferred to both surfaces of the polymer electrolyte membrane, and electrodes attached to both surfaces of the catalyst coated membrane. A polymer electrolyte fuel cell that directly converts chemical energy into electric energy is assembled by laminating a plurality of single cells having the MEA as a basic component.

In recent years, MEAs have begun to be used in hydrogen gas production apparatuses that produce hydrogen using electric energy.

MEAs are required to have electronic insulation performance, ion conducting performance, and gas impermeability as functions thereof. If any foreign substance or defect is present in the catalyst coated membrane, these functions are damaged. Therefore, MEAs are assembled after the catalyst coated membrane and the electrodes are individually subjected to preliminary inspection. It is to be noted that the foreign substance of the MEA is a solid matter mixed in the vicinity of the electrode on the outer side of the MEA or the catalyst coated membrane inside the MEA. Meanwhile, the defect of the MEA refers to deficits such as breakage and cracks of the catalyst coated membrane inside the MEA, lack of the catalyst, as well as overlapping wrinkles of the catalyst coated membrane.

A method for producing a membrane-electrode assembly for a fuel cell has been previously proposed, in which a first electrode catalyst layer is provided on one side of an electrolyte membrane and preliminarily inspected for defects from the outside by an optical defect detection method, then a second electrode catalyst layer is preliminarily inspected for defects from the outside, and then the second electrode catalyst layer is bonded to a side of the electrolyte membrane reverse to the first electrode catalyst layer (see Patent Document 1).

In addition, there has been proposed a transmission X-ray analyzer that detects a transmitted X-ray image using a plurality of time delay integration sensors while moving a band-shaped continuous inspection object (see Patent Document 2).

Furthermore, there has also been proposed a device that detects, from heat distribution, the disturbance of heat conduction caused by defects for the purpose of non-destructively inspecting a MEA for internal defects (see

Patent Document 3).

Furthermore, there have been proposed techniques for detecting internal defects of a MEA using an X-ray CT scanner that performs X-ray tomography (see Patent Documents 4 and 5).

Furthermore, there have also been proposed a program for efficiently detecting the presence or absence of surface deficits (lacks such as dents) and the presence or absence of foreign substances for, for example, an electrode of a fuel cell or a solid polymer membrane, and an inspection method and an inspection device based on the program (see Patent Document 6).

### PRIOR ART DOCUMENTS

### PATENT DOCUMENTS

Patent Document 1: Japanese Patent Laid-open Publication No. 2015-149201
Patent Document 2: Japanese Patent Laid-open Publication No. 2013-170924
Patent Document 3: Japanese Patent Laid-open Publication No. 2006-47313
Patent Document 4: Japanese Patent Laid-open Publication No. 2015-159058
Patent Document 5: Japanese Patent Laid-open Publication No. 2007-265970
Patent Document 6: Japanese Patent Laid-open Publication No. 2013-167596

### SUMMARY OF THE INVENTION

### PROBLEMS TO BE SOLVED BY THE INVENTION

Even if it has been confirmed that an electrolyte membrane or a catalyst coated membrane has no damage before assembly of a MEA, damages may occur during assembly of the MEA. Therefore, there is a demand for a method for inspecting a MEA for damages inside the MEA, in particular, internal defects and internal foreign substances.

The preliminary inspection of the electrode catalyst layers proposed in Patent Document 1 has a problem that the inspection is incapable of detecting internal defects and internal foreign substances generated in the step of bonding the electrode catalyst layer.

Although the transmission X-ray analyzer proposed in Patent Document 2 is capable of detecting foreign substances, it is insufficient in detection sensitivity, and the transmission X-ray analyzer has a problem that it is incapable of detecting deficits and lacks irrespective of whether the deficits and lacks are present outside or inside.

According to the proposal of Patent Document 3, based on the judgement that it is difficult to non-destructively inspect the MEA as a multilayer structure for internal defects by X-rays or ultrasonic waves, a test method of detecting internal defects by the disturbance of heat conduction is attempted. Patent Document 3, however, has a problem that the method is low in detection sensitivity for detecting internal defects and is incapable of detecting minute internal defects.

The X-ray CT scanner proposed in Patent Documents 4 and 5 is capable of detecting internal defects of the MEA, such as foreign substances, internal lacks, and internal cracks inside the MEA by three-dimensional image analysis. However, since the detection field of view is narrow and it is necessary to perform hundreds of measurements from different angles for one detection field of view, the X-ray CT scanner has a problem that it requires a very long time to inspect the entire area of the MEA in a plurality of detection fields of view.

In addition, Patent Document 6 discloses, as for the inspection method and the inspection device proposed therein, a program for diagnostic imaging for inspecting an electrode of a fuel cell and a solid electrolyte membrane for the presence or absence of surface lacks and the presence or absence of surface foreign substances. The inspection method and the inspection device, however, have a problem that they are incapable of detecting internal defects and internal foreign substances of a multilayer structure such as a MEA in which an electrode, a catalyst, and an electrolyte membrane are integrated together.

It is an object of the present invention to provide a continuous non-destructive inspection method for a membrane-electrode assembly for rapidly inspecting the entire area of the MEA and detecting minute internal foreign substances and minute internal defects, and a continuous non-destructive inspection device used in the continuous non-destructive inspection method.

### SOLUTIONS TO THE PROBLEMS

The continuous non-destructive inspection method for a membrane-electrode assembly according to the present invention for solving the above-mentioned problems includes the step of: detecting presence or absence of an internal foreign substance and an internal defect in the membrane-electrode assembly using a transmitted X-ray image obtained by repeating the steps of: conveying the membrane-electrode assembly to a photographing position sandwiched between an X-ray imaging unit and an X-ray source that is disposed so as to face the X-ray imaging unit and that has a focal spot size of 50 µm or less; temporarily stopping the conveyance of the membrane-electrode assembly and emitting X-rays from the X-ray source toward the X-ray imaging unit in a state where the membrane-electrode assembly stands still in the photographing position to take a transmitted X-ray image; and restarting the conveyance of the membrane-electrode assembly to move the membrane-electrode assembly from the photographing position.

According to a preferred aspect of the continuous non-destructive inspection method for a membrane-electrode assembly according to the present invention, the X-ray source has an acceleration voltage of 20 kV or more and 120 kV or less.

According to a preferred aspect of the continuous non-destructive inspection method for a membrane-electrode assembly according to the present invention, the membrane-electrode assembly is mounted on and fixed to a fixing plate at the photographing position.

According to a preferred aspect of the continuous non-destructive inspection method for a membrane-electrode assembly according to the present invention, the fixing plate has an opening to expose an inspection region of the membrane-electrode assembly to a side of the X-ray source.

According to a preferred aspect of the continuous non-destructive inspection method for a membrane-electrode assembly according to the present invention, the transmitted X-ray image is taken while the X-ray source and the X-ray imaging unit move integrally and simultaneously in a direction parallel to the membrane-electrode assembly.

According to a preferred aspect of the continuous non-destructive inspection method for a membrane-electrode assembly according to the present invention, an image obtained by subjecting an original image obtained in the X-ray imaging unit to digital image processing combining filtering processing with brightness contrast processing is used as the transmitted X-ray image used in the step of detecting the presence or absence of the internal foreign substance and the internal defect.

According to a preferred aspect of the continuous non-destructive inspection method for a membrane-electrode assembly according to the present invention, the internal defect in the membrane-electrode assembly is a defect due to misalignment of a member that constitutes the membrane-electrode assembly, and the defect due to misalignment of the member is detected.

According to a preferred aspect of the continuous non-destructive inspection method for a membrane-electrode assembly according to the present invention, the X-ray source has an acceleration voltage of 50 kV or more and 120 kV or less.

According to a preferred aspect of the continuous non-destructive inspection method for a membrane-electrode assembly according to the present invention, the X-ray source has an acceleration voltage of 20 kV or more and 60 kV or less.

The continuous non-destructive inspection device for a membrane-electrode assembly according to the present invention is a continuous non-destructive inspection device having an X-ray imaging unit, an X-ray source that is disposed so as to face the X-ray imaging unit and that has a focal spot size of 50 µm or less, and a conveying means for the membrane-electrode assembly, the continuous non-destructive inspection device including: a detection means that detects presence or absence of an internal foreign substance and an internal defect in the membrane-electrode assembly using a plurality of transmitted X-ray images obtained by repeatedly running a conveying means that determines a photographing position at a position sandwiched between the X-ray imaging unit and the X-ray source, and conveys the membrane-electrode assembly to the photographing position, an imaging means that temporarily stops the conveyance of the membrane-electrode assembly and emits X-rays from the X-ray source toward the X-ray imaging unit in a state where the membrane-electrode assembly stands still in the photographing position to take a transmitted X-ray image, and a conveying means that restarts the conveyance of the membrane-electrode assembly to move the membrane-electrode assembly from the photographing position, wherein the conveying means are composed of a sending conveying means and a receiving conveying means for the membrane-electrode assembly, and the photographing position is positioned at a middle of the sending conveying means and the receiving conveying means along a conveying direction of the membrane-electrode assembly.

### EFFECTS OF THE INVENTION

According to the present invention, it is possible to detect minute internal foreign substances and internal defects of a membrane-electrode assembly continuously and non-destructively. The method and the device according to the present invention are capable of detecting, with high sensitivity, foreign substances and defects that are mixed inside the membrane-electrode assembly in the production process of the membrane-electrode assembly and that cannot be detected by preliminary member inspection, and are continuous and non-destructive, so that the method and the device are useful for in-process quality inspection and pre-shipment product inspection.

Furthermore, according to the present invention, foreign substances and internal defects of 0.1 mm or less in the membrane-electrode assembly can be detected non-destructively and efficiently, and in particular, internal defects of the membrane-electrode assembly that are defects caused by misalignment of members that constitute the membrane-electrode assembly can be detected.

### BRIEF DESCRIPTION OF THE DRAWINGS

Fig. 1 is a conceptual side view showing an embodiment of a continuous non-destructive inspection device for carrying out a continuous non-destructive inspection method for a membrane-electrode assembly according to the present invention.
Fig. 2 is a drawing for illustrating an inspection magnification of the continuous non-destructive inspection device for carrying out the continuous non-destructive inspection method for a membrane-electrode assembly according to the present invention.
Figs. 3(a) to 3(c) are drawings for illustrating a modified example of the embodiment of the continuous non-destructive inspection device for carrying out the continuous non-destructive inspection method for a membrane-electrode assembly according to the present invention.
Figs. 4(A) to 4(C) are images for illustrating a detection example of internal defects obtained by carrying out the continuous non-destructive inspection method for a membrane-electrode assembly according to the present invention.
Figs. 5(A) to 5(C) are images for illustrating a detection example of minute internal defects obtained by carrying out the continuous non-destructive inspection method for a membrane-electrode assembly according to the present invention.

### EMBODIMENTS OF THE INVENTION

The continuous non-destructive inspection method for a membrane-electrode assembly according to the present invention includes the step of: detecting presence or absence of an internal foreign substance and an internal defect in the membrane-electrode assembly using a transmitted X-ray image obtained by repeating the steps of: conveying the membrane-electrode assembly to a photographing position sandwiched between an X-ray imaging unit and an X-ray source that is disposed so as to face the X-ray imaging unit and that has a focal spot size of 50 µm or less; temporarily stopping the conveyance of the membrane-electrode assembly and emitting X-rays from the X-ray source toward the X-ray imaging unit in a state where the membrane-electrode assembly stands still in the photographing position to take a transmitted X-ray image; and restarting the conveyance of the membrane-electrode assembly to move the membrane-electrode assembly from the photographing position.

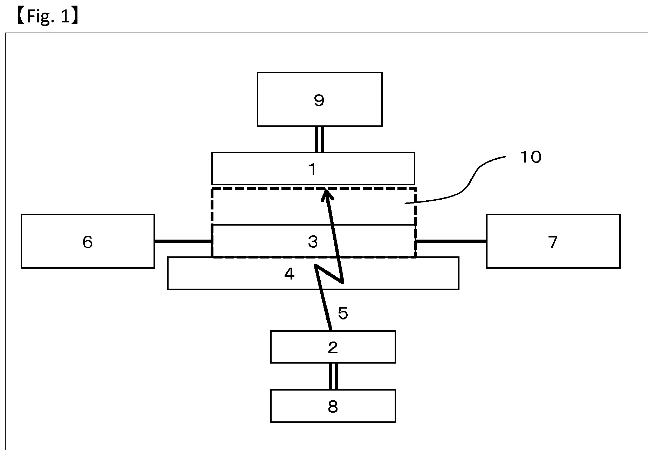

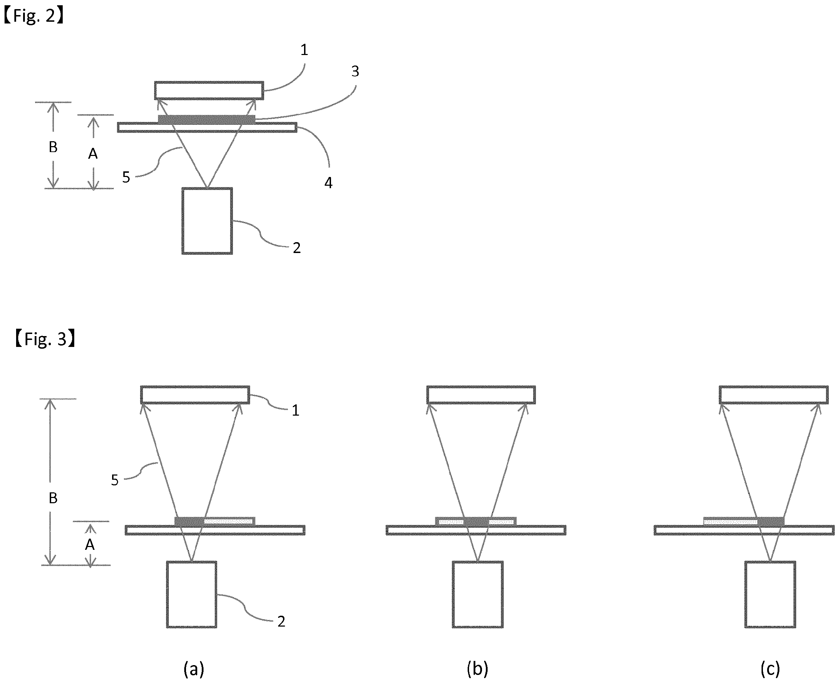

In the following, the continuous non-destructive inspection method for a MEA according to the present invention (hereinafter sometimes simply referred to as "the inspection method according to the present invention") and the continuous non-destructive inspection device for a MEA according to the present invention will be described with reference to the embodiment shown in Figs. 1 and 2 as appropriate.

Fig. 1 is a conceptual side view showing a configuration of a continuous non-destructive inspection device for carrying out the continuous non-destructive inspection method for a membrane-electrode assembly according to the present invention. In the drawing, positions of a high-voltage power supply 8 and a digital image processing mechanism 9 that are connected by electrical wires indicated by double lines can be changed.

In the continuous non-destructive inspection device shown in Fig. 1, a MEA 3 is conveyed by a sending conveying means 6 to a photographing position 10 sandwiched between an X-ray imaging unit 1 and an X-ray source 2 disposed so as to face the X-ray imaging unit 1. Then, the conveyance of the MEA 3 is temporarily stopped at the photographing position 10, and X-rays 5 are emitted from the X-ray source 2 in a state where the MEA 3 stands still in the photographing position 10 to detect transmitted X-rays at the X-ray imaging unit 1, whereby a transmitted X-ray image is taken. Using a transmitted X-ray image obtained by subjecting an original image obtained in the X-ray imaging unit 1 to digital image processing by the digital image processing mechanism, the detection sensitivity for detecting foreign substances and defects is improved.

As used herein, the term "transmitted X-ray image" means an image obtained based on an X-ray image that is detected at the X-ray imaging unit and is produced from X-rays emitted from the X-ray source and pass through the MEA as an inspection object. The term means a gray image (original image) itself, which is obtained by the difference in attenuation of X-rays generated when the X-rays pass through the MEA, or an image obtained by subjecting the original image to signal amplification or image processing. The original image may be a digital image or an analog image, and is preferably a gradation image obtained by digitalizing the transmitted X-ray dose detected by the X-ray imaging unit in gray scale gradation. The gradation accuracy of the image is preferably 8 bits (256 gradations) or more. If the gradation accuracy is less than 8 bits, improvement in detection sensitivity by the digital image processing described later is insufficient.

When the photographing is finished, the MEA 3 is moved from the photographing position 10 by a receiving conveying means 7. At the same time, another MEA 3 as the next inspection object is conveyed by the sending conveying means 6 to the photographing position 10, and is photographed. Repetition of this operation enables efficient inspection of a large number of MEAs.

The continuous non-destructive inspection method for a membrane-electrode assembly according to the present invention can be applied to both of continuous sheet-shaped MEAs that are continuous in a band shape, and individual sheet-shaped MEAs cut into pieces of an arbitrary size suitable for the purpose of being laminated and assembled into a fuel cell. In the case where the inspection method is applied to continuous sheet-shaped MEAs, since the MEAs are continuous, after the completion of photographing, the range of the MEA 3 that has been photographed is moved from the photographing position by the receiving conveying means 7 and, at the same time, the range to be photographed next is conveyed to the photographing position 10 by the sending conveying means 6 and photographed.

Alternatively, in the case where individual sheet-shaped MEAs are inspected, conveying the MEAs in a state of being attached to a band-shaped conveyor such as a conveying film at a predetermined interval is a preferred aspect because the MEAs can be inspected efficiently due to the roll conveyance. Providing an opening in the band-shaped conveyor and attaching the individual sheet-shaped MEAs to the opening is a more preferred aspect because it is possible to avoid attenuation of X-rays due to the conveyor. Furthermore, in the case of individual sheet-shaped MEAs, it is possible to cut the MEAs into pieces of an arbitrary size and then attaching the pieces to a resin frame.

An appropriate method for conveying the MEAs can be selected according to the form of the MEAs or the presence or absence of the conveyor. In the case where continuous sheet-shaped MEAs or individual sheet-shaped MEAs are attached to a band-shaped conveyor at a predetermined interval, it is preferable to employ roll conveyance as the conveying means. Alternatively, in the case where individual sheet-shaped MEAs are individually inspected as they are without being attached to a conveyor, it is possible to use a conveying means that moves the individual sheet-shaped MEAs while adsorbing and holding the MEAs. For example, use of a transfer robot arm capable of moving the individual sheet-shaped MEAs while adsorbing and holding the MEAs to convey the individual sheets is a preferred aspect because the photographing position can be fixed.

The conveying means convey the MEAs intermittently by stopping the conveyance during the photographing of the MEAs to make the MEAs stand still, and restarting the conveyance after the photographing. In the case where continuous sheet-shaped MEAs or individual sheet-shaped MEAs are attached to a band-shaped conveyor, the conveying distance is preferably set so that the entire area of the MEAs can be photographed by sequentially joining the continuously taken transmitted X-ray images.

In the embodiment of Fig. 1, the MEA 3 is mounted on and fixed to a fixing plate 4 at the photographing position 10. The fixing plate 4 temporarily fixes the MEA during the photographing, so that the reproducibility of defect detection is improved, and the reliability of the inspection is improved. As the fixing plate 4, it is preferable to use one made of a material having a small X-ray absorption coefficient, such as plastic. In a more preferred aspect, an opening is provided in the fixing plate 4 in a range in which the MEA 3 is irradiated with the X-rays 5 from the X-ray source 2. This makes it possible to prevent attenuation of the X-rays 5 due to the fixing plate 4.

Then, at the photographing position 10, the X-rays 5 emitted from the X-ray source 2 driven by the high-voltage power supply for generating X-rays are attenuated in the course of passing through the fixing plate 4 and the MEA 3 standing still on the fixing plate 4, and are detected by the X-ray imaging unit 1. That is, a transmitted X-ray image (original image) of the MEA is taken.

The X-ray source 2 used in the present invention may be either of an open X-ray source that generates X-rays while performing vacuum evacuation with a vacuum evacuation device, or a sealed X-ray source that does not require a vacuum evacuation device.

In order to detect minute foreign substances or internal defects of 0.1 mm or less by the continuous non-destructive inspection method for a membrane-electrode assembly according to the present invention, the focal spot size of the X-ray source is required to be 50 µm or less. The focal spot size is preferably 20 µm or less and, in a more preferred aspect, 10 µm or less. As for the focal spot size of the X-ray source, in the case where an open X-ray source is used, a very small focal spot is generally employed. Such focal spot is obtained by narrowing down the electron beams accelerated by the high-voltage power supply to a very small spot using a magnetic field generated by a convergence coil. In the case where a sealed X-ray source is used, in general, the focal spot size is reduced by a method in which a miniaturized heating filament is used as an electron source, and the electron beams are accelerated by a high-voltage power supply and narrowed down in an electrostatic lens mode. These modes of X-ray sources are described in "X-ray Handbook" (published in 1997, Electron Science Institute).

X-rays are generated by acceleration of electron beams with a voltage supplied from the high-voltage power supply, and deceleration of the accelerated electron beams due to collision with a target made of a heat-resistant metal or the like. Therefore, the X-ray transmission power and the X-ray intensity can be controlled by the acceleration voltage.

In the continuous non-destructive inspection method for a membrane-electrode assembly according to the present invention, it is preferable to use X-rays having an acceleration voltage of 20 kV or more and 120 kV or less. If the acceleration voltage is too low, X-rays are absorbed by the MEA as an inspection object, detection of the transmitted X-ray image by the X-ray imaging unit is difficult, and in particular, the detection sensitivity for detecting internal foreign substances tends to be low. Alternatively, if the acceleration voltage is too high, both the intensity and the transmission power of the X-rays generated from the X-ray source increase, and the amount of X-rays absorbed by the MEA decreases, so that the intensity of X-rays incident on the X-ray imaging unit tends to exceed the upper limit of detectable intensity, or the detection sensitivity for detecting internal defects of the MEA tends to be low.

In the case where the X-ray detection sensitivity of the X-ray imaging unit significantly varies depending on the acceleration voltage of the X-ray source, an acceleration voltage at which the X-ray imaging unit has high sensitivity can be further selected from the range of 20 kV or more and 120 kV or less. In general, the sensitivity of the X-ray imaging unit is high when the acceleration voltage of the X-ray source is high.

When it is desired to specifically detect internal defects in the catalyst layer portion of the catalyst coated membrane inside the MEA as an inspection object, the acceleration voltage is preferably 50 kV or more and 120 kV or less. This is because the catalyst layer contains metal atoms and has a relatively high X-ray absorption coefficient as compared with other portions that constitute the MEA, so that the internal defects can be easily detected from the transmitted X-ray image even if the acceleration voltage is set at a high value.

Alternatively, when it is desired to specifically detect internal defects in the electrolyte membrane portion, the acceleration voltage is preferably 20 kV or more and 60 kV or less. This is because the electrolyte membrane has a relatively low X-ray absorption coefficient, so that the internal defects can be easily detected from the transmitted X-ray image by setting the acceleration voltage at a low value.

As the X-ray imaging unit, a flat two-dimensional X-ray scintillator detector including a phosphor that absorbs X-rays and emits fluorescence and two-dimensionally arranged photoelectric conversion elements is typically used. Furthermore, a plurality of two-dimensional X-ray scintillator detectors can be joined together to form a large-area X-ray imaging unit.

The inspection magnification can be set by changing the interval between the X-ray imaging unit 1 and the MEA 3. When the X-ray imaging unit 1 is brought sufficiently close to the MEA 3, the inspection magnification is substantially 1-fold.

Fig. 2 is a drawing for illustrating an inspection magnification of the continuous non-destructive inspection device for carrying out the continuous non-destructive inspection method for a membrane-electrode assembly according to the present invention, and is a schematic view of areas around the photographing position at an inspection magnification of about 1-fold.

In Fig. 2, the distance between the MEA 3 and the X-ray source 2 is defined as A, and the distance between the X-ray imaging unit 1 and the X-ray source 2 is defined as B. In the case of Fig. 2, since the distance A between the MEA 3 and the X-ray source 2 and the distance B between the X-ray imaging unit 1 and the X-ray source 2 are substantially equal, the inspection magnification is about 1-fold. In Fig. 2, the MEA 3 stands still on the fixing plate 4, and is sufficiently close to the X-ray imaging unit 1. The X-rays emitted from the lower X-ray source 2 sequentially pass through the fixing plate 4 and the MEA 3, and are detected as a transmitted X-ray image in the X-ray imaging unit 1. It is possible to detect more minute defects by increasing the distance between the X-ray imaging unit 1 and the MEA 3, that is, by increasing the B/A ratio.

The inspection magnification is preferably 1-fold to 200-fold, more preferably 20-fold to 120-fold. This is because if the inspection magnification is too high, a long inspection time is required for inspecting the entire area of the MEA, whereas if the inspection magnification is low, the detection sensitivity for detecting internal foreign substances and internal defects is low.

In a preferred aspect of the continuous non-destructive inspection method for a membrane-electrode assembly according to the present invention, while the MEA stands still in the photographing position, the X-ray source and the X-ray imaging unit move integrally and simultaneously in a direction parallel to the flat MEA to enlarge the photographing range.

The moving direction of the X-ray source may be either a direction perpendicular to the conveying direction or the conveying direction. The photographing range can be further enlarged by employing a configuration in which the X-ray source moves in these directions in combination. As a result, even if the inspection magnification is increased, it is easy to inspect the entire area of the MEA. Furthermore, even if the MEA is larger than the X-ray imaging unit, the entire area of the MEA can be inspected. When the X-ray source or the X-ray imaging unit is difficult to move, it is possible to intermittently move the MEA together with the fixing plate while making the MEA stand still during the photographing.

Figs. 3(a) to 3(c) are drawings for illustrating a modified example of the embodiment of the continuous non-destructive inspection device for carrying out the continuous non-destructive inspection method for a membrane-electrode assembly according to the present invention. In Figs. 3(a) to 3(c), a case in which the inspection magnification is 4-fold (B/A = 4), and the X-ray source and the X-ray imaging unit are relatively moved with respect to the MEA to enlarge the inspection range will be described as an example.

As shown in Fig. 3(a), the X-ray imaging unit 1 is arranged at a position away from the MEA 3 and X-rays are emitted from the lower X-ray source 2, whereby a transmitted X-ray image at an inspection magnification of 4-fold is obtained. The reference sign A represents the distance from the X-ray source 2 to the MEA 3, the reference sign B represents the distance from the X-ray source 2 to the X-ray imaging unit 1, and the distance B is 4 times as long as the distance A.

The X-ray imaging unit 1 and the X-ray source 2 are sequentially moved to the positions shown in Figs. 3(b) and 3(c) and photographing is performed, whereby three 4-fold inspection images at these positions are obtained. It is possible to take a wide range of transmitted X-ray image by joining the three images together.

In the continuous non-destructive inspection method for a membrane-electrode assembly according to the present invention, it is preferable to detect minute foreign substances and minute internal defects using an image obtained by subjecting the original image obtained in the X-ray imaging unit 1 to digital image processing. This is because the digital image processing improves the detection sensitivity and enables detection of more minute foreign substances and defects.

In a preferred aspect, the digital image processing applied to the original image is a combination of filtering processing and brightness contrast processing. The filtering processing refers to image processing of subjecting an original image in the form of a digital image or an original image obtained by preliminarily converting an analog image into a digital image to two-dimensional Fourier transform, then subjecting the image to bandpass filter processing for removing a low frequency component and a high frequency component, and further subjecting the image to two-dimensional inverse Fourier transform. The filtering processing removes the low frequency component and, particularly when a plurality of inspection images are joined together, unifies the sensitivity between the images. Furthermore, the removal of the high frequency component reduces the noise in the whole image, and thus facilitates the detection of minute internal defects. The brightness contrast processing is image processing of subjecting an image obtained by the filtering processing to intensity adjustment (brightness adjustment) and contrast adjustment. This facilitates the detection of internal defects.

The internal foreign substance of the MEA referred to herein means incorporated solid matters that are present at the inner side of the electrodes at both the outermost layers of the MEA and that cannot be detected by appearance inspection, and includes incorporated solid matters contained inside the electrodes.

The internal defect of the MEA referred to herein means a defect that damages the function of the MEA, such as deficits of the catalyst coated membrane including breakage and cracks, coating defects and lack of the catalyst, as well as overlapping wrinkles of the catalyst coated membrane, which are present at the inner side of the electrodes at both the outermost layers of the MEA and which cannot be detected by appearance inspection. Also when a member that constitutes the MEA is in an inaccurate position due to misalignment, if the defect cannot be detected by appearance inspection, the defect is included in the internal defect because the defect damages the function of the MEA.

Members that constitute the MEA include, in addition to electrodes, a catalyst, and an electrolyte membrane, an adhesive, an ion-conducting adhesive agent, a reinforcing membrane or a reinforcing frame for the electrolyte membrane, a reinforcing frame for the catalyst coated membrane, electrodes, and MEA, and a member for hermetic sealing.

In the continuous non-destructive inspection method for a membrane-electrode assembly according to the present invention, it is preferable to inspect the members that constitute the MEA for misalignment. This is because such misalignment is an internal defect that occurs in the production process of the MEA, and cannot be detected by preliminary inspection of the members.

As for the misalignment of members that constitute the MEA, abnormality of position can be detected by a method in which an inspector visually inspects the position of the members determined from the transmitted X-ray image obtained by the inspection. This is because the members each have a simple geometric shape, and it is possible to easily determine any relative rotation or misalignment between the members. It is also preferable to employ a method of visually comparing the transmitted X-ray image obtained by the inspection with the transmitted X-ray image in which the members are at normal positions, or a method of detecting abnormality of position by obtaining the difference between digital images. This is because it is easy to determine objective inspection standards for the determination of normality/abnormality or non-defective product/defective product.

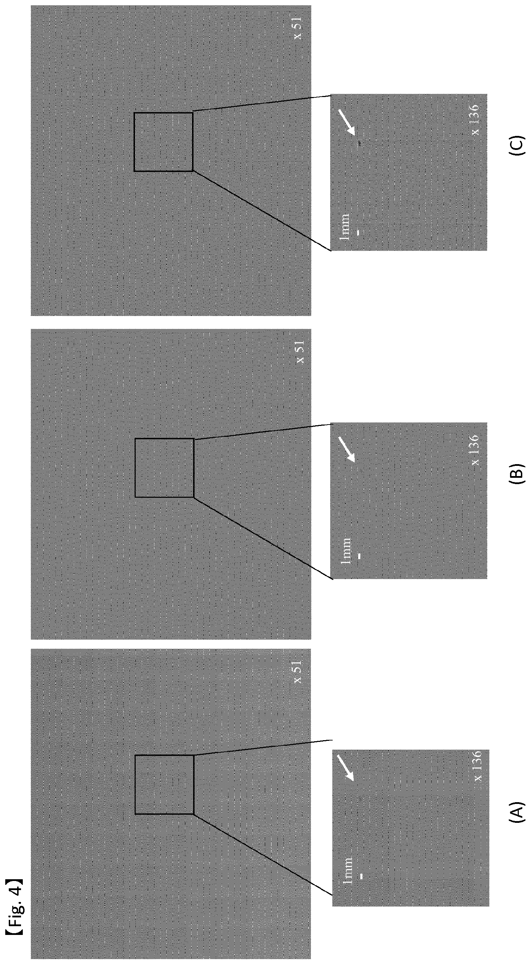

Figs. 4(A) to 4(C) are images for illustrating a detection example of internal defects obtained by carrying out the continuous non-destructive inspection method for a membrane-electrode assembly according to the present invention.

In the following, referring to Figs. 4(A) to 4(C), an inspection method for a MEA for detecting internal defects and foreign substances by digital image processing will be described.

Fig. 4(A) shows a transmitted X-ray image (original image) obtained by inspecting a MEA at an inspection magnification of 51-fold using an X-ray source having a focal spot size of 5 µm at an acceleration voltage of 100 kV, sequentially moving the MEA relative to the X-ray source and the X-ray imaging unit, and joining the inspection regions (10 horizontal lines and 9 vertical columns) one after another, and a partially magnified image (136-fold) of the transmitted X-ray image. Fig. 4(B) shows a processed image obtained by subjecting the digital image in Fig. 4(A) to two-dimensional filtering processing, and a partially magnified image thereof (136-fold). Fig. 4(C) shows a final processed image obtained by subjecting the image in Fig. 4(B) to brightness contrast processing, and a partially magnified image thereof (136-fold).

In each of Figs. 4(A), 4(B), and 4(C), the position of detected foreign substance in the partially magnified image is indicated by an arrow 11. This is an example showing that the digital image processing of the original image facilitates the determination of the detected foreign substance, and enables the detection of an internal foreign substance of about 1 mm.

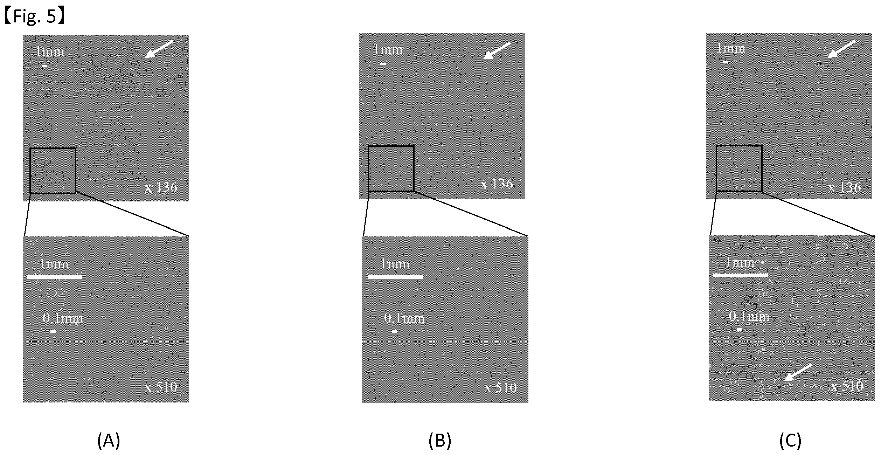

Figs. 5(A) to 5(C) are images for illustrating a detection example of minute internal defects obtained by carrying out the continuous non-destructive inspection method for a membrane-electrode assembly according to the present invention. In Figs. 5(A) to 5(C), a detection example of more minute internal foreign substances is shown.

Fig. 5(A) is the partially magnified image in Fig. 4(A) (136-fold: recited), and a re-magnified image (510-fold) of the partially magnified image. Fig. 5(B) is the partially magnified image in Fig. 4(B) (136-fold: recited), and a re-magnified image (510-fold) of the partially magnified image. Fig. 5(C) is the partially magnified image in Fig. 4(C) (136-fold: recited), and a re-magnified image (510-fold) of the partially magnified image.

These are examples showing that the digital image processing enables the detection of an internal foreign substance of about 0.05 mm that is present at a position different from that in Figs. 4(A) to 4(C) (the position indicated by an arrow 12 in the re-magnified image in Fig. 5(C) (510-fold)).

The continuous non-destructive inspection method and the continuous non-destructive inspection device for a membrane-electrode assembly according to the present invention are applicable to industrial applications such as quality control and product management in the production process of a membrane-electrode assembly used in a fuel cell or a hydrogen gas production apparatus. Specifically, the method and the device are used in inspection for sorting out defective products in the production process of a membrane-electrode assembly, and pre-shipment inspection after the production. Furthermore, the method and the device are also useful for acceptance inspection performed upon arrival of the membrane-electrode assembly, for example.

### DESCRIPTION OF REFERENCE SIGNS

1: X-ray imaging unit
2: X-ray source
3: MEA
4: Fixing plate
5: X-rays
6: Sending conveying means
7: Receiving conveying means
8: High-voltage power supply
9: Digital image processing mechanism
10: Photographing position
11: Arrow indicating foreign substance of about 1 mm in size
12: Arrow indicating foreign substance of about 0.05 mm in size
   A: Distance between X-ray source and MEA
   B: Distance between X-ray source and X-ray imaging unit

## Claims

1. A continuous non-destructive inspection method for a membrane-electrode assembly, comprising the step of:
detecting presence or absence of an internal foreign substance and an internal defect in the membrane-electrode assembly using a transmitted X-ray image obtained by repeating the steps of:
conveying the membrane-electrode assembly to a photographing position sandwiched between an X-ray imaging unit and an X-ray source that is disposed so as to face the X-ray imaging unit and that has a focal spot size of 50 µm or less;
temporarily stopping the conveyance of the membrane-electrode assembly and emitting X-rays from the X-ray source toward the X-ray imaging unit in a state where the membrane-electrode assembly stands still in the photographing position to take a transmitted X-ray image; and
restarting the conveyance of the membrane-electrode assembly to move the membrane-electrode assembly from the photographing position.

2. The continuous non-destructive inspection method for a membrane-electrode assembly according to claim 1, wherein the X-ray source has an acceleration voltage of 20 kV or more and 120 kV or less.

3. The continuous non-destructive inspection method for a membrane-electrode assembly according to claim 1 or 2, wherein the membrane-electrode assembly is mounted on and fixed to a fixing plate at the photographing position.

4. The continuous non-destructive inspection method for a membrane-electrode assembly according to claim 3, wherein the fixing plate has an opening to expose an inspection region of the membrane-electrode assembly to a side of the X-ray source.

5. The continuous non-destructive inspection method for a membrane-electrode assembly according to any one of claims 1 to 4, wherein the transmitted X-ray image is taken while the X-ray source and the X-ray imaging unit move integrally and simultaneously in a direction parallel to the membrane-electrode assembly.

6. The continuous non-destructive inspection method for a membrane-electrode assembly according to any one of claims 1 to 5, wherein an image obtained by subjecting an original image obtained in the X-ray imaging unit to digital image processing combining filtering processing with brightness contrast processing is used as the transmitted X-ray image used in the step of detecting the presence or absence of the internal foreign substance and the internal defect.

7. The continuous non-destructive inspection method for a membrane-electrode assembly according to any one of claims 1 to 6, wherein the internal defect in the membrane-electrode assembly is a defect due to misalignment of a member that constitutes the membrane-electrode assembly.

8. The continuous non-destructive inspection method for a membrane-electrode assembly according to any one of claims 1 to 7, wherein the X-ray source has an acceleration voltage of 50 kV or more and 120 kV or less.

9. The continuous non-destructive inspection method for a membrane-electrode assembly according to any one of claims 1 to 8, wherein the X-ray source has an acceleration voltage of 20 kV or more and 60 kV or less.

10. A continuous non-destructive inspection device for a membrane-electrode assembly having an X-ray imaging unit, an X-ray source that is disposed so as to face the X-ray imaging unit and that has a focal spot size of 50 µm or less, and conveying means for the membrane-electrode assembly, the continuous non-destructive inspection device comprising:
detection means that detects presence or absence of an internal foreign substance and an internal defect in the membrane-electrode assembly using a transmitted X-ray image obtained by repeatedly running conveying means that determines a photographing position at a position sandwiched between the X-ray imaging unit and the X-ray source, and conveys the membrane-electrode assembly to the photographing position, imaging means that temporarily stops the conveyance of the membrane-electrode assembly and emits X-rays from the X-ray source toward the X-ray imaging unit in a state where the membrane-electrode assembly stands still in the photographing position to take a transmitted X-ray image, and conveying means that restarts the conveyance of the membrane-electrode assembly to move the membrane-electrode assembly from the photographing position,
wherein the conveying means are composed of sending conveying means and receiving conveying means for the membrane-electrode assembly, and the photographing position is positioned at a middle of the sending conveying means and the receiving conveying means along a conveying direction of the membrane-electrode assembly.
